# EUROPÄISCHE PATENTSCHRIFT

(11) **EP 1 847 416 B1**
(45) Veröffentlichungstag und Bekanntmachung des Hinweises auf die Patenterteilung: **29.07.2009**
(21) Anmeldenummer: 07105688.1
(22) Anmeldetag: 05.04.2007
(51) Int. Cl.: B60L 11/12, G05B 9/00, H04L 12/00

(54) **Vorrichtung und Verfahren zur Ansteuerung eines Fahrzeugs mit mehreren Achsmodulen**
Device and method for steering a vehicle with several axle modules
Dispositif et procédé destinés à la commande d'un véhicule doté de plusieurs modules d'axes

(30) Priorität: 22.04.2006 DE 102006018816
(43) Veröffentlichungstag der Anmeldung: 24.10.2007
(73) Patentinhaber: ZF Friedrichshafen AG, 88038 Friedrichshafen (DE)
(72) Erfinder: Amann, Notker, 88045 Friedrichshafen (DE); Januschevski, Robert, 88069 Tettnang (DE)

(56) Entgegenhaltungen:
- EP-A- 0 514 075
- EP-A- 1 115 220
- EP-A2- 1 060 941
- DE-A1- 10 005 527
- DE-A1- 10 249 713
- JP-A- 59 123 401
- US-A- 5 461 608
- US-A- 5 907 486

## Beschreibung

Die vorliegende Erfindung betrifft eine Vorrichtung zur Ansteuerung eines Fahrzeugs mit mehreren Achsmodulen, gemäß dem Oberbegriff des Patentanspruchs 1. Ferner bezieht sich die Erfindung auf ein Verfahren zur Ansteuerung eines Fahrzeugs mit mehreren Achsmodulen.

Ein Achsmodul umfasst zwei lenkbare Räder, die jeweils über eine Gelenkwelle angetrieben werden. Die Gelenkwellen werden wiederum durch ein Zentralgetriebe angetrieben, an das in der Regel zwei Elektromotoren angeflanscht sind, die durch zwei einzelne oder einen doppelten Frequenzumrichter, umfassend einen Wechselrichter, angesteuert werden (Einzelradantrieb). Die Koordination der Einzelradansteuerung für sämtliche Achsmodule übernimmt nach dem Stand der Technik ein Steuergerät, die sogenannte "Transmission Control Unit" (TCU).

Fahrzeuge mit mehreren Achsmodulen sind aus dem Stand der Technik bekannt. Sie umfassen mindestens zwei Achsmodule, wobei die Anzahl der Achsmodule pro Fahrzeug bei Bedarf auf vier oder sogar mehr erhöht werden kann.

Die DE 100 05 527 A1 der Anmelderin beschreibt eine Antriebsanlage für ein Kettenfahrzeug mit einem ersten und einem zweiten elektrischen Generator, mit einer ersten und einer zweiten Brennkraftmaschine, wobei jeweils ein Generator von einer Brennkraftmaschine antreibbar ist, und mit elektrischen Antriebsmotoren zum Antrieb von einer rechten und einer linken Antriebskette. Dabei sind die Elemente der bekannten Antriebseinheit in der Weise miteinander verknüpft, dass der rechten Antriebskette ein erster rechter und ein zweiter rechter elektrischer Antriebsmotor zugeordnet ist, dass der linken Antriebskette ein erster linker und ein zweiter linker elektrischer Antriebsmotor zugeordnet ist, dass die beiden ersten Antriebsmotoren vom ersten Generator und die beiden zweiten Antriebsmotoren vom zweiten Generator gespeist werden. Durch die Verschalung der Energiepfade soll eine hohe Betriebssicherheit auch bei teilweise beschädigter Antriebsanlage, d.h. bei Beschädigung eines Generators oder eines Antriebsmotors, erreicht werden.

Der vorliegenden Erfindung liegt die Aufgabe zugrunde, eine Vorrichtung zur Ansteuerung eines Fahrzeugs mit mehreren Achsmodulen anzugeben. Des weiteren soll ein Verfahren angegeben werden, durch dessen Durchführung die Funktion der Antriebe aller Achsmodule auch bei Auftreten eines Fehlers im Steuergerät eines einzelnen Achsmoduls gewährleistet wird.

Diese Aufgabe wird für eine Vorrichtung zur Ansteuerung eines Fahrzeugs mit mehreren Achsmodulen durch die Merkmale des Patentanspruchs 1 gelöst. Ein Verfahren zur Ansteuerung eines Fahrzeugs mit mehreren Achsmodulen ist Gegenstand des Patentanspruchs 6. Weitere erfindungsgemäße Ausgestaltungen und Vorteile gehen aus den entsprechenden Unteransprüchen hervor.

Demnach wird eine Vorrichtung zur Ansteuerung eines Fahrzeugs mit mehreren Achsmodulen vorgeschlagen, welche mehrere Steuergeräte (TCU's) umfasst, die jeweils in ein Achsmodul integriert sind bzw. einem Achsmodul zugeordnet sind. Hierbei ist vorgesehen, dass nur ein Steuergerät die Koordination bzw. Steuerung aller Achsmodule übernimmt (d.h. nur eine TCU dient als Master), wobei die weiteren Steuergeräte in den übrigen Achsmodulen als Slaves (Slave1, Slave2, usw.) programmiert sind und jederzeit als Master-Steuergerät dienen und die Koordination aller Module übernehmen können.

Hierbei umfasst ein Achsmodul vorzugsweise jeweils zwei, insbesondere lenkbare, Räder, die jeweils über eine Gelenkwelle angetrieben werden, wobei die Gelenkwellen durch ein Zentralgetriebe angetrieben werden, an das zumindest ein Elektromotor angeflanscht ist, wobei der zumindest eine Elektromotor durch zwei einzelne oder einen doppelten Frequenzumrichter, umfassend einen Wechselrichter, angesteuert wird.

Die Aktivierung eines Steuergerätes als Master-Gerät erfolgt vorzugsweise über eine Codierung am Fahrzeug, beispielsweise durch eine Steckercodierung am fahrzeugseitigen Steckerteil.

Im Rahmen des erfindungsgemäßen Verfahrens erkennt ein Steuergerät in einem Achsmodul durch die Steckercodierung, dass es als Master-Gerät dient und übernimmt als Master die Ansteuerung aller Achsmodule, d.h. es gibt aktiv Botschaften über das CAN (Controller Area Network) an die anderen Module. Die Steuergeräte in den anderen Modulen "hören" auf CAN mit, senden aber selber nichts.

Gemäß der Erfindung ist vorgesehen, dass das Master-Gerät durch die Gesamtsystemsteuerung VCU (Vehicle Control Unit) laufend auf seine Funktion hin getestet wird; dies kann beispielsweise durch eine "Rechenaufgabe" erfolgen.

Falls die Gesamtsystemsteuerung oder ein Steuergerät in den anderen Achsmodulen einen Fehler im Master-Gerät erkennt, übernimmt ein anderes Steuergerät als Master-Gerät die Koordination bzw. Steuerung aller Achsmodule und das bisherige Master-Gerät wird abgeschaltet, Vorzugsweise wird das Slave1-Gerät zum Master-Gerät, das Slave2-Gerät (falls vorhanden) zum Slavel-Gerät und bei n Steuergeräten das Slave_n-Gerät zum Slave_n-1-Gerät.

Für den Fall, dass mehr als zwei Steuergeräte bzw. Achsmodule vorhanden sind, kann analog zur dargestellten Vorgehensweise bei Ausfall des neuen Master-Gerätes, das aktuelle Slave1-Gerät als Master-Gerät dienen und das aktuelle Slave2-Gerät (falls vorhanden) als Slave1-Gerät dienen. Bei n-Geräten gilt dies analog, so dass das Slave_n-1-Gerät zum Slave_n-2-Gerät wird. Dies kann bei erneutem Ausfall eines Steuergerätes solange wiederholt werden, bis kein funktionierendes Steuergerät zur Verfügung steht.

Demnach können bei n Steuergeräten bzw. Achsmodulen n-1 Steuergeräte ausfallen, ohne dass die Funktion der einzelnen Achsmodule beeinträchtigt wird, da das übriggebliebene funktionierende Steuergerät als Master-Gerät die Steuerung aller Achsmodule übernimmt.

Gemäß der Erfindung wird zusätzlich zu den digitalen Signalen das Lastgeber-Signal als analoges Signal zu allen Wechselrichtern der Frequenzumrichter zur Ansteuerung der Elektromotoren verdrahtet, um einen Notfall-Betrieb für den Fall des Ausfalls sämtlicher Steuergeräte zu ermöglichen. Zu diesem Zweck ist eine analoge Verbindung zwischen dem Lastgeber und den Wechselrichtern der Frequenzumrichter vorgesehen.

Beim Erkennen des Ausfalls sämtlicher Steuergeräte durch die Gesamtsystemsteuerung (VCU) werden diese abgeschaltet. Des weiteren schalten die Wechselrichter in einen Notfall-Modus um und benutzen das analoge Lastgeber-Signal als Drehmomentvorgabe, wenn sie über CAN keine Botschaften der Steuergeräte mehr empfangen oder über CAN in den Notfall-Modul umgeschaltet werden.

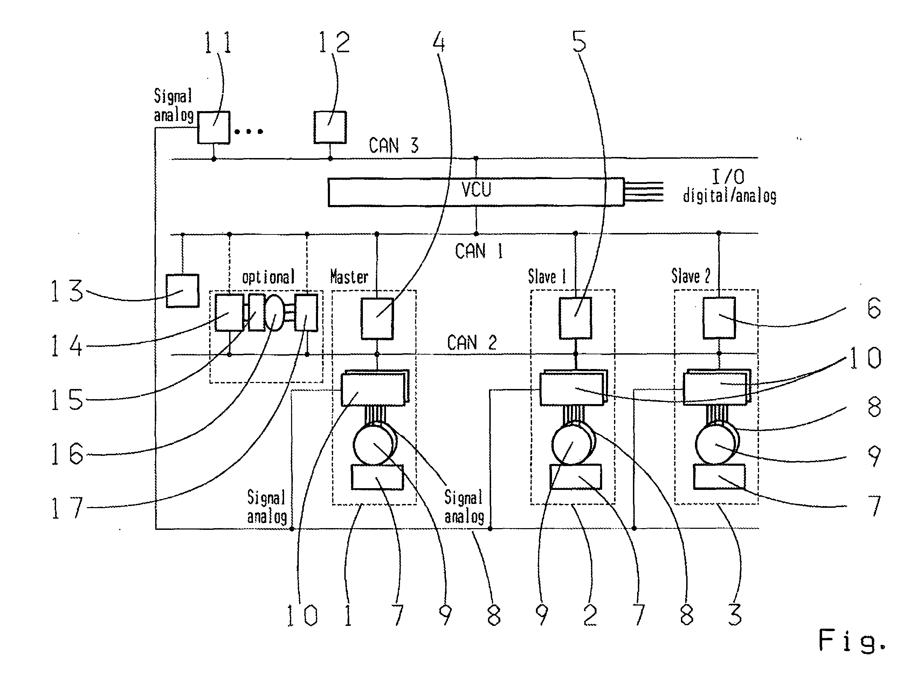

Die Erfindung wird im Folgenden anhand der beigefügten Figur, welche das erfindungsgemäße Steuerungskonzept für ein Fahrzeug mit drei Achsmodulen schematisch darstellt, beispielhaft näher erläutert.

Gemäß der Erfindung wird bei einem Fahrzeug mit mehreren Achsmodulen 1, 2, 3 in jedes Achsmodul 1, 2 bzw, 3 ein Steuergerät 4, 5, bzw, 6 eingebaut. Ein Achsmodul 1, 2, 3 umfasst zwei lenkbare Räder, die jeweils über eine Gelenkwelle angetrieben werden, wobei die Gelenkwellen durch ein Zentralgetriebe 7 angetrieben werden, an das in der Regel zwei Elektromotoren 8, 9 angeflanscht sind, die durch zwei einzelne oder einen doppelten Frequenzumrichter 10, umfassend einen Wechselrichter, angesteuert werden.

Gemäß der Erfindung übernimmt ein Steuergerät 4 die Koordination bzw. Steuerung aller Achsmodule 1, 2, 3; dieses Steuergerät 4 dient als Master-Gerät, wobei die weiteren Steuergeräte 5, 6 der Module 2 bzw. 3 als Slave1- bzw. Slave2-Gerät dienen. Wie bereits erläutert, erfolgt die Aktivierung eines Steuergerätes als Master-Gerät vorzugsweise über eine Codierung am Fahrzeug, beispielsweise durch eine Steckercodierung am fahrzeugseitigen Steckerteil. Die Kommunikation zwischen der Gesamtsystemsteuerung VCU und den Steuergeräten 4, 5, 6, die Kommunikation der Steuergeräte 4, 5, 6 untereinander sowie die Kommunikation zwischen einem Steuergerät und weiteren Komponenten eines Achsmoduls erfolgt über das CAN.

Das (aktuelle) Master-Gerät 4 wird durch die Gesamtsystemsteuerung VCU (Vehicle Control Unit) laufend auf seine Funktion hin getestet. Falls die Gesamtsystemsteuerung VCU oder ein Steuergerät 5, 6 in den anderen Achsmodulen 2, bzw. 3 einen Fehler im Master-Gerät 4 erkennt, übernimmt ein anderes Steuergerät als Master-Gerät die Koordination bzw. Steuerung aller Achsmodule und das bisherige Master-Gerät wird abgeschaltet. Vorzugsweise wird das Slave1-Gerät 5 zum Master-Gerät und das Slave2-Gerät 6 wird zum Slave1-Gerät. Bei erneutem Ausfall von Steuergeräten wird dies solange wiederholt, bis kein funktionierendes Steuergerät zur Verfügung steht.

Für den Fall, dass sämtliche Steuergeräte ausfallen, wird gemäß der Erfindung im Rahmen eines Notfall-Modus das analoge Signal des Lastgebers 11, das zu allen Wechselrichtern der Frequenzumrichter 10 zur Ansteuerung der Elektromotoren 8, 9 verdrahtet ist, als Drehmomentvorgabe benutzt, wobei die Wechselrichter in den Notfall-Modus umschalten, wenn sie über CAN keine Botschaften der Steuergeräte mehr empfangen oder über CAN in den Notfall-Modus umgeschaltet werden. Beim Erkennen des Ausfalls sämtlicher Steuergeräte 4, 5, 6 durch die Gesamtsystemsteuerung VCU werden diese gemäß der Erfindung abgeschaltet.

In der Figur ist mit dem Bezugszeichen 12 der Lenkgeber und mit dem Bezugszeichen 13 ein Nebenaggregat (PTO) bezeichnet. Ferner ist das Triebwerkmodul dargestellt, welches die Steuerung 14 des Verbrennungsmotors, den Verbrennungsmotor 15, einen Generator 16 und eine Einspeiseeinheit 17 umfasst.

Durch die erfindungsgemäße Konzeption wird ein Verfahren zur Ansteuerung eines Fahrzeugs mit mehreren Achsmodulen zur Verfügung gestellt, durch dessen Durchführung die Funktion der elektrischen Antriebe aller Achsmodule auch bei Auftreten eines Fehlers im Steuergerät zumindest eines einzelnen Achsmoduls gewährleistet wird. Ferner wird für den Fall des Ausfalls sämtlicher Steuergeräte basierend auf den an die Wechselrichter geleiteten analogen Lastgebersignale, ein Notbetrieb gewährleistet.

### Bezugszeichen

- 1: Achsmodul
- 2: Achsmodul
- 3: Achsmodul
- 4: Steuergerät
- 5: Steuergerät
- 6: Steuergerät
- 7: Zentralgetriebe
- 8: Elektromotor
- 9: Elektromotor
- 10: Frequenzumrichter
- 11: Lastgeber
- 12: Lenkgeber
- 13: Nebenaggregat
- 14: Steuerung des Verbrennungsmotors 15
- 15: Verbrennungsmotor
- 16: Generator
- 17: Einspeiseeinheit

- VCU: Gesamtsystemsteuerung

## Patentansprüche

1. Vorrichtung zur Ansteuerung eines Fahrzeugs mit mehreren Achsmodulen, wobei die Achsmodule jeweils zwei Räder umfassen, die jeweils über eine durch ein Zentralgetriebe angetriebene Gelenkwelle angetrieben werden, wobei an das Zentralgetriebe zumindest ein Elektromotor angeflanscht ist, der durch zwei einzelne oder einen doppelten Frequenzumrichter, umfassend einen Wechselrichter, angesteuert wird, **dadurch gekennzeichnet, dass** sie mehrere Steuergeräte (4, 5, 6) umfasst, die jeweils in ein Achsmodul (1, 2, 3) integriert sind bzw. einem Achsmodul (1, 2, 3) zugeordnet sind, wobei nur ein Steuergerät (4) die Koordination bzw. Steuerung aller Achsmodule (1, 2, 3) übernimmt und als Master-Gerät dient, und wobei die weiteren Steuergeräte (5, 6) in den übrigen Achsmodulen (2, 3) als Slaves (Slave1, Slave2, usw.) programmiert sind und jederzeit als Master-Steuergerät dienen und die Koordination aller Module übernehmen können, und dass zwischen dem Lastgeber (11) und den Wechselrichten der Frequenzumrichter (10) eine analoge Verbindung vorgesehen ist, um einen Notfall-Betrieb für den Fall des Ausfalls sämtlicher Steuergeräte (4,5,6) zu ermöglichen.

2. Vorrichtung zur Ansteuerung eines Fahrzeugs mit mehreren Achsmodulen nach Anspruch 1, **dadurch gekennzeichnet, dass** die Aktivierung eines Steuergerätes als Master-Gerät über eine Codierung am Fahrzeug erfolgt.

3. Vorrichtung zur Ansteuerung eines Fahrzeugs mit mehreren Achsmodulen nach Anspruch 2, **dadurch gekennzeichnet, dass** die Aktivierung eines Steuergerätes als Master-Gerät durch eine Steckercodierung am fahrzeugseitigen Sieckerteil erfolgt.

4. Vorrichtung zur Ansteuerung eines Fahrzeugs mit mehreren Achsmodulen nach Anspruch 1,2 oder 3, **dadurch gekennzeichnet, dass** die Kommunikation zwischen der Gesamtsystemsteuerung (VCU) und den Steuergeräten (4, 5, 6), die Kommunikation der Steuergeräte (4, 5, 6) untereinander sowie die Kommunikation zwischen einem Steuergerät (4, 5, 6) und weiteren Komponenten eines Achsmoduls über das CAN erfolgt.

5. Verfahren zur Ansteuerung eines Fahrzeugs mit mehreren Achsmodulen, wobei die Achsmodule jeweils zwei lenkbare Räder umfassen, die jeweils über eine durch ein Zentralgetriebe angetriebene Gelenkwelle angetrieben werden, wobei an das Zentralgetriebe zumindest ein Elektromotor angeflanscht ist, der durch zwei einzelne oder einen doppelten Frequenzumrichter, umfassend einen Wechselrichter, angesteuert wird, wobei das Fahrzeug eine Vorrichtung zur Ansteuerung nach einem der Ansprüche 1 bis 4 aufweist, **dadurch gekennzeichnet, dass** nur ein Steuergerät (4) eines Achsmoduls (1) als Master-Gerät die Koordination bzw. Steuerung aller Achsmodule (1, 2, 3) übernimmt, wobei die weiteren Steuergeräte in den übrigen Achsmodulen (2, 3) als Slaves (Slave1, Slave2, usw.) dienen und wobei das aktuelle Master-Gerät (4) durch die Gesamtsystemsteuerung (VCU) laufend auf seine Funktion hin getestet wird, und dass für den Fall, dass sämtliche Steuergeräte (4, 5, 6) ausfallen, im Rahmen eines Notfall-Modus das analoge Signal eines Lastgebers (11), der zu allen Wechselrichtern der Frequenzumrichter (10) zur Ansteuerung der Elektromotoren (8, 9) verdrahtet ist, als Drehmomentvorgabe benutzt wird, wobei die Wechselrichter in den Notfall-Modus umschalten, wenn sie über CAN keine Botschaften der Steuergeräte mehr empfangen oder über CAN in den Notfall-Modus umgeschaltet werden.

6. Verfahren zur Ansteuerung eines Fahrzeugs mit mehreren Achsmodulen nach Anspruch 5, **dadurch gekennzeichnet, dass**, falls die Gesamtsystemsteuerung (VCU) oder ein Steuergerät (5, 6) in den anderen Achsmodulen (2, 3) einen Fehler im Master-Gerät (4) erkennt, ein anderes Steuergerät (5) als Master-Gerät die Koordination bzw. Steuerung aller Achsmodule (1, 2, 3) übernimmt, wobei das bisherige Master-Gerät (4) abgeschaltet wird, und wobei dies bei erneutem Ausfall von Steuergeräten solange wiederholt wird, bis kein funktionierendes Steuergerät zur Verfügung steht.

7. Verfahren zur Ansteuerung eines Fahrzeugs mit mehreren Achsmodulen nach Anspruch 6, **dadurch gekennzeichnet, dass** das Slave1-Gerät (5) zum Master-Gerät, das Slave2-Gerät (6) (falls vorhanden) zum Slave1-Gerät wird, und dass bei n Steuergeräten das Slave_n-Gerät zum Slave_n-1-Gerät wird.

## Claims

1. Apparatus for actuating a vehicle with a plurality of axle modules, the axle modules comprising in each case two wheels which are driven in each case via an articulated shaft which is driven by a central gear mechanism, at least one electric motor being flange-connected to the central gear mechanism, which electric motor is actuated by two individual frequency converters or a double frequency converter, comprising an inverter, **characterized in that** it comprises a plurality of control units (4, 5, 6) which are integrated in each case into an axle module (1, 2, 3) or are assigned to an axle module (1, 2, 3), only one control unit (4) taking charge of the coordination or control of all the axle modules (1, 2, 3) and serving as master unit, and the further control units (5, 6) in the remaining axle modules (2, 3) being programmed as slaves (slave1, slave2, etc.) and it being possible for them to serve as master control unit at any time and take charge of the coordination of all the modules, and **in that** an analogue connection is provided between the load signal transmitter (11) and the inverters of the frequency converters (10), in order to make emergency operation possible for the case where all the control units (4, 5, 6) fail.

2. Apparatus for actuating a vehicle with a plurality of axle modules according to Claim 1, **characterized in that** a control unit is activated as master unit via a coding on the vehicle.

3. Apparatus for actuating a vehicle with a plurality of axle modules according to Claim 2, **characterized in that** a control unit is activated as master unit by a plug encoding on the vehicle-side plug part.

4. Apparatus for actuating a vehicle with a plurality of axle modules according to Claim 1, 2 or 3,
**characterized in that** the communication between the overall system controller (VCU) and the control units (4, 5, 6), the communication of the control units (4, 5, 6) among one another and the communication between a control unit (4, 5, 6) and further components take place via the CAN.

5. Method for actuating a vehicle with a plurality of axle modules, the axle modules comprising in each case two steerable wheels which are driven in each case via an articulated shaft which is driven by a central gear mechanism, at least one electric motor being flange-connected to the central gear mechanism, which electric motor is actuated by two individual frequency converters or a double frequency converter, comprising an inverter, the vehicle having an apparatus for actuation according to one of Claims 1 to 4,
**characterized in that** only one control unit (4) of an axle module (1) takes charge, as master unit, of the coordination or control of all the axle modules (1, 2, 3), the further control units in the remaining axle modules (2, 3) serving as slaves (slave1, slave2, etc.) and the current master unit (4) being tested continuously with regard to its function by the overall system controller (VCU), and **in that**, for the case where all the control units (4, 5, 6) fail, the analogue signal of a load signal transmitter (11) which is wired to all the inverters of the frequency converters (10) for actuating the electric motors (8, 9) is used in the context of an emergency mode as a torque instruction, the inverters switching over into the emergency mode if they no longer receive messages from the control units via CAN or are switched over into the emergency mode via CAN.

6. Method for actuating a vehicle with a plurality of axle modules according to Claim 5, **characterized in that**, if the overall system controller (VCU) or a control unit (5, 6) in the other axle modules (2, 3) detects an error in the master unit (4), another control unit (5) takes charge, as master unit, of the coordination or control of all the axle modules (1, 2, 3), the previous master unit (4) being switched off, and this being repeated if control units fail again, until no functioning control unit is available.

7. Method for actuating a vehicle with a plurality of axle modules according to Claim 6, **characterized in that** the slave1 unit (5) becomes the master unit, the slave2 unit (6) (if present) becomes the slave1 unit, and **in that**, in the case of n control units, the slave_n unit becomes the slave_n-1 unit.

## Revendications

1. Dispositif de commande d'un véhicule doté de plusieurs modules d'axes, dans lequel les modules d'axe comprennent respectivement deux roues, qui sont respectivement entraînées par un arbre à cardan entraîné par une transmission centralisée, au moins un moteur électrique étant raccordé par bride à la transmission centralisée, lequel moteur est commandé par deux convertisseurs de fréquence individuels ou un convertisseur de fréquence double, comprenant un onduleur, **caractérisé en ce que** il comprend plusieurs appareils de commande (4,5,6), qui sont respectivement intégrés dans un module d'axe (1,2,3), respectivement sont coordonnés à un module d'axe (1,2,3), dans lequel seul un appareil de commande (4) entreprend la coordination, respectivement la commande de tous les modules d'axes (1,2,3) et sert d'appareil maître, et dans lequel les autres appareils de commande (5,6) sont programmés comme esclaves (Slave 1, Slave 2, etc.) dans les modules d'axes (2,3) restants et servent à chaque fois d'appareil de commande maître et peuvent entreprendre la coordination de tous les modules, **en ce que** entre le détecteur de charge (11) et les onduleurs du convertisseur de fréquence (10), une liaison analogique est prévue, afin de permettre un fonctionnement en cas d'urgence dans le cas d'une défaillance de tous les appareils de commande (4,5,6).

2. Dispositif de commande d'un véhicule doté de plusieurs modules d'axes selon la revendication 1, **caractérisé en ce que** l'activation d'un appareil de commande faisant office d'appareil maître se fait par un codage sur le véhicule.

3. Dispositif de commande d'un véhicule doté de plusieurs modules d'axes selon la revendication 2, **caractérisé en ce que** l'activation d'un appareil de commande faisant office d'appareil maître se fait par un codage de connecteur sur la partie de connecteur du côté du véhicule.

4. Dispositif de commande d'un véhicule doté de plusieurs modules d'axes selon la revendication 1, 2 ou 3, **caractérisé en ce que** la communication entre la commande de système globale (VCU) et les appareils de commande (4,5,6), la communication entre les appareils de commande (4,5,6) ainsi que la communication entre un appareil de commande (4,5,6) et d'autres composants d'un module d'axe se fait par l'intermédiaire du bus CAN.

5. Procédé de commande d'un véhicule doté de plusieurs modules d'axes, dans lequel les modules d'axes comprennent respectivement deux roues dirigeables, qui sont respectivement entraînées par un arbre à cardan entraîné par une transmission centralisée, au moins un moteur électrique étant raccordé par bride à la transmission centralisée, lequel moteur est commandé par deux convertisseurs de fréquence individuels ou un convertisseur de fréquence double, comprenant un onduleur, dans lequel le véhicule présente un dispositif de commande selon une des revendications 1 à 4, **caractérisé en ce que** seul un appareil de commande (4) d'un module d'axe (1) faisant office d'appareil maître entreprend la coordination, respectivement la commande de tous les modules d'axes (1,2,3), dans lequel les autres appareils de commande servent d'esclaves (Slave 1, Slave 2, etc.) dans les modules d'axes restants (2,3) et dans lequel le fonctionnement de l'appareil maître actuel (4) est testé continuellement par la commande du système global (VCU), et **en ce que** au cas où tous les appareils de commande (4,5,6) connaissent une défaillance, dans le cadre d'un mode de fonctionnement d'urgence, le signal analogique d'un détecteur de charge (11), qui est câblé à tous les onduleurs du convertisseur de fréquence (10) à des fins de commande des moteurs électriques (8,9), est utilisé comme prescription de couple de rotation, dans lequel les onduleurs commutent en mode de fonctionnement d'urgence, quand ils ne reçoivent plus de messages des appareils de commande par l'intermédiaire du bus CAN ou sont commutés par l'intermédiaire du bus CAN en mode de fonctionnement d'urgence.

6. Procédé de commande d'un véhicule doté de plusieurs modules d'axes selon la revendication 5, **caractérisé en ce que**, au cas où la commande du système global (VCU) ou un appareil de commande (5,6) dans les autres modules d'axes (2,3) reconnaît une erreur dans l'appareil maître (4), un autre appareil de commande (5) que l'appareil maître entreprend la coordination, respectivement la commande de tous les modules d'axes (1,2,3), dans lequel l'appareil maître (4) actuel est déconnecté et dans lequel ceci est répété en cas de nouvelle défaillance des appareils de commande tant que aucun appareil de commande en bon état de fonctionnement n'est disponible.

7. Procédé de commande d'un véhicule doté de plusieurs modules d'axes selon la revendication 6, **caractérisé en ce que** l'appareil esclave 1 (5) devient l'appareil maître, l'appareil esclave 2 (6) (quand celui-ci est présent) devient l'appareil esclave 1, et **en ce que** en présence de n appareils de commande l'appareil esclave_n devient l'appareil esclave_n-1.
